# EUROPEAN PATENT SPECIFICATION

(11) **EP 2 448 455 B1**
(45) Date of publication and mention of the grant of the patent: **12.11.2014**
(21) Application number: 10735334.4
(22) Date of filing: 30.06.2010
(51) Int. Cl.: A47J 43/07, B01F 7/00

(54) **MIXING TOOL FOR STIFF DOUGH**
MIXWERKZEUG FÜR FESTEN TEIG
OUTIL DE MALAXAGE POUR PÂTES LOURDES

(30) Priority: 30.06.2009 EP 09008518; 30.06.2009 EP 09008519; 30.06.2009 EP 09008520; 30.06.2009 EP 09008521; 30.06.2009 DE 202009009041 U; 30.06.2009 DE 202009009042 U
(43) Date of publication of application: 09.05.2012
(73) Proprietor: De'Longhi Braun Household GmbH, 63263 Neu-Isenberg (DE)
(72) Inventor: RING, Martin, 61479 Glashuetten (DE); PREISS, Thomas, 64297 Darmstadt (DE)
(74) Representative: Hoffmann Eitle
(86) International application number: PCT/IB2010/053001
(87) International publication number: WO 2011/001393

(56) References cited:
- WO-A-01/47362
- WO-A-03/073860
- WO-A-2009/069161
- DE-A1- 2 121 684
- FR-A1- 2 707 187
- FR-A1- 2 891 450

## Description

### Field of the Invention

The present invention relates to a mixing tool, preferably for a food processor. For example, the mixing tool can be used in a stand-alone unit (which is typically connected to a mixing bowl). It can be used to great advantage in mixing bowls or dough troughs. It can also be used in a hand mixer. In particular, it is suitable for use with the drive unit of a hand-held blender. The mixing tool should be suitable for mixing cakes, bread, or pizza dough, but also for whipping cream and for chopping tasks, as they come up during mixing.

### Background of the Invention

A multitude of mixing tools are known for food processors, but also for other mixing, stirring and chopping tasks.

U.S. 2006/0062079 A1 (Ekato Solidmix GmbH) discloses a mixing tool with two adjustable arms for use in a mixing trough. This mixing tool can be supplemented with a chopping tool. The mechanical design is demanding. Using a chopping tool in addition appears more costly.

EP 1982624 A1 (Electrodomesticos Taurus S.L.) discloses a kitchen tool, especially for a hand blender. This tool has three or more blades and is made of metal. The blades are arranged at different angles to enable thorough mixing of food in a mixing bowl. Apart from their configuration, the blades have essentially simple symmetrical shapes. It therefore seems unlikely that mixing results could be achieved which would be sufficient for mixing cake batter.

U.S. 2,193,686 (Craddock) discloses a mixing tool with essentially propeller-shaped mixing blades, which additionally have certain claws or bars. This mixing tool may do its job effectively, but is costly to produce, and can be made only of metal for its complex form to have sufficient stability.

EP 1923128 A2 (SEB S.A.) discloses a tool that should be useful especially for preparing jam. The mixing tool exhibits relatively large mixing blades. One mixing blade is oriented in the direction of rotation and one is oriented opposite the direction of rotation. The mixing blades are tailored exactly to the mixing bowl to be used. Obviously, the mixing tool can be used with difficulty or not used at all with another mixing bowl. Because of the size of the mixing blades a considerable torque is required to achieve both sufficiently thorough mixing and also chopping of fruits and the like.

From WO01/47362 (Conair Corporation) a mixing tool is known with a hub element rotating around a drive axel in the direction of rotation, from which two mixing paddles extend radially to the drive axel, having curved impact surfaces which therefore have different impact directions, wherein the angle between the impact direction (perpendiculars to the impact surface) and the corresponding direction of movement (direction of rotation) is constant along the entire length of the impact surface.

The present invention would avoid the shortcomings of the prior art. In particular, a good thorough mixing of even stiff doughs should be possible with a simple and inexpensively produced tool. This tool should also be usable with food processors that cannot provide high torques.

This task is achieved by a mixing tool according to Claim 1.

### Main features of the invention

The present invention relates to a mixing tool, preferably for food processors, in particular for mixing dough, with a hub element capable of rotating in a direction of rotation around a drive axis, from which at least one mixing paddle extends radially to the drive axis, having an impact surface curved so that it exhibits different directions of impact, wherein a radially interior portion of the impact surface has a direction of impact predominantly parallel to the direction of rotation, and an adjacent radially exterior portion having a direction of impact predominantly perpendicular to the direction of rotation. Further, the invention relates to a motor-driven food processor with such a mixing tool.

The mixing tool preferably has a hub element rotating around a drive axis in a direction of rotation from which at least two mixing paddles extend radially to the drive axis, each having an impact surface, wherein on the impact surface of the mixing blades there additionally is an inclined surface and this inclined surface on the first mixing blade is directed upwards and the inclined surface on the second mixing blade is directed downward.

The hub element of the mixing tool preferably has at least one area near the axis and at least one area remote from the axis, wherein the area remote from the axis has a convex shape, that is, it arches toward the mixture striking the hub element.

Preferably, the hub element has a first surface comprising at least one depression, wherein in the region of the depression an opening is provided through which the first surface is connected to a second surface of the hub element.

Preferably, the mixing tool has a hub element rotating around a drive axis in a direction of rotation from which at least one first mixing paddle and at least one first mixing blade extend radially from the drive axis, wherein the mixing paddle has a first radius and a first axial height and a first area product which is formed by the first radius and the first axial height, and the first mixing blade a has second radius and a second axial height and a second area product, which is formed by the second radius and the second axial height, wherein in the mixing tool the first radius is at least twice as large as the second radius and the first area product is smaller than the second area product.

In addition, the mixing tool preferably has a coupling component and a radial disc, which is configured between the hub element and the coupling component. The coupling component has a first cross-sectional area in the area transitional to the radial disc, and the hub element has a second cross-sectional area in the area transitional to the radial disc, wherein the first cross-sectional area and the second cross-sectional area have different shapes, and the radial disc, at least partially projects beyond the first and / or the second cross-sectional area.

### Detailed description of the invention

The mixing tool has a hub element, which can be rotated about a drive axis in a rotational direction. In principle, this hub element can have any shape. For example, it may be essentially cylindrical. More complex forms can also be considered, for example, the hub element can be undulating in cross-section.

At least one mixing paddle extends from the hub element. This extends radially to the drive axis, that is, at least one component of the mixing arm extends radially. The mixing paddle need not be exactly perpendicular to the drive axle, but can also be oblique to the vertical at a specific angle. Preferably, however, at least one mixing arm is perpendicular to the drive axle.

This mixing paddle has an impact face. The term "impact surface" here means any surface suitable for whipping or mixing dough. In particular, surfaces substantially perpendicular to the direction of rotation are suitable. The impact surface may be flat or may have a concave or convex curvature. Preferably, the impact surface has an expansion of at least 0.1 mm, 0.25 mm or 0.5 mm in a vertical direction (that is, towards the axis of rotation) wherein expansions of more than 1 mm or 2 mm or 5 mm are also considered, but expansion preferably does not exceed 10 mm or 20 mm.

Viewed from the direction of the drive axle, according to the invention, the impact surface must not be flat, but is curved. Consequently, it has different impact directions. "Impact direction" is understood to mean perpendicular to a section of the impact surface.

A portion of the impact surface lying radially inward has a direction of impact facing essentially parallel to the rotational direction. In contrast, an adjacent portion facing radially outward has a direction of impact substantially perpendicular to the rotational direction. In other words, this portion of the external impact surface is substantially tangential disposed to the direction of rotation.

This alignment of a portion of the impact surface has surprisingly proven to be advantageous for obtaining favorable mixing results. The exact processes involved in mixing of different doughs are unknown and are likely to depend very much on the specific dough or mixture. It is conceivable that the mixture is "pulled down" by the impact surface, which is advantageous. Moreover, the impact surface, even if it is perpendicular to the rotational direction, exerts a certain degree of cutting or chopping effect, as it seems.

In one embodiment of the invention, a radially outward lying portion of the impact surface can have components oriented opposite to the direction of rotation. Again, it has been shown that even a component so oriented provides an advantageous mixing action.

It is also advantageous if the impact surface is continuous. Alternatively, however, the impact surface can also be composed of different segments or bars in a row behind each other. Also, it has proven to be advantageous if the impact surface describes an arc. In particular, an impact surface is suitable in which the direction of impact changes by more than 90° or by more than 100° over the length of the impact face. A curved impact surface, in particular, is among the options. All of these various embodiments deliver good mixing results. This takes place even if the impact surface is in part aligned parallel to the direction of rotation. By avoiding the conventional frontal impact, so to speak, however, the mixing tool is more effective and also has a more favorable torsional moment than does a conventional tool.

In one embodiment, the mixing tool has an inclined surface joined to the impact surface which forms an acute angle with a radial plane. A radial plane is a plane on which the drive axis is vertical. If the mixing tool has only one mixing paddle, the perpendicular of the inclined surface advantageously points essentially upward (forms an acute angle with the vertical direction). The provision of an inclined surface leads to better stirring and thorough mixing results. It is assumed that the inclined surface aids in the complete chopping of the mixture and that the inclined surface also induces currents in the liquid which are conducive to thorough mixing.

The mixing tool may also include a second mixing paddle. (Also third, fourth, fifth or additional mixing paddles would be possible.) This mixing paddle should also extend radially to the drive axle in the manner described for the first mixing paddle. The second mixing blade also has a curved impact surface that has different impact directions, each perpendicular to the impact face. In one embodiment, the second mixing paddle can be radially opposite the first mixing paddle.

A mixing tool with two mixing paddles preferably has at least one inclined surface joining at least one impact surface. The perpendiculars of the inclined surfaces advantageously point essentially up or down (form an acute angle with the perpendicular direction).

The second mixing blade can have essentially the same contour as the first mixing paddle, that is, the second mixing paddle is rotationally symmetrical to the first mixing paddle. Preferably, the second mixer paddle has a different contour than the first mixing paddle, that is, it is not rotationally symmetrical to the first mixing paddle.

Preferably, the second mixing paddle is configured to be axially higher than the first. It has been shown that the combination of mixing paddles having different contours delivers better mixing results than two mixing paddles having the same contour. This applies particularly to axial mixing paddles mounted at different heights. In this connection, it is also favorable to determine the height at which the mixing paddles are mounted on the axel by the choice of contour. Another mixing blade attached below, it appears to be advantageous if it produces a direction of flow or mixing that is directed more upward, that is, away from the bottom of a mixing vessel. In addition, it is advantageous if this mixing tool has a large inclined surface pointing upward.

Preferably, the direction of impact in the second mixer paddle changes along the length of the impact surface less than 100° or less than 90°. Also, an inclined surface can join the impact surface of the second mixing paddle, forming an acute angle with a radial plane. Preferably, the second mixing paddle mounted further up has an inclined surface directed downward.

The hub element has at least one area close to the axis and one area remote from the axis. The area remote from the axis preferably has a convex shape, that is, it arches into the mixture which strikes against the hub element. The area close to the axis chiefly comprises the axis of rotation. The area remote from the axis can therefore be joined directly to the area of the axis of rotation. However, it can also begin only at a distance from the axis of rotation. Further, it may also extend only to the radially outer boundary of the hub element, or it may terminate before that.

It has proved to be appropriate if the mixing tool has a plurality of such areas remote from the axis having a convex shape. This may involve in particular two, three, four or more areas remote from the axis. These can be arranged so that they are the same angular distance from each other.

A very functional mixing tool has a hub with two areas remote from the axis. This mixing tool may have a cross-section that is S-shaped in at least one radial plane. The cross-section can also be entirely S-shaped, that is, in all radial planes. It is particularly advantageous when a mixing blade is joined to the hub element in at least one area remote from the axis. This mixing blade need not occupy the entire axial length of the hub element, it being sufficient if it is provided in one axial section. For example, the mixing blade may be provided at the lower end of the axis. The mixing blade is preferably axially oriented, that is, its main mixing surface is configured along the axel, in practice this is usually a vertical orientation. It is also especially advantageous to provide two radially opposite mixing blades. These mixing blades work together with the areas remote from the axis of the hub element in any order whatsoever and lead to good mixing results. In particular, the hub element can be designed to blend smoothly into the mixing blades. That is, there are no edges or junctions between mixing blades and hub element. In particular, the tangent with which the surfaces of the mixing blade adjoin the adjacent areas of the hub element can be parallel to the tangents in these adjacent areas of the hub element.

In addition to the mixing blades, mixing blades, mixing paddles can be provided. These mixing paddles can be longer in the radial direction than the mixing blades. In particular, two opposite radial mixing paddles may be used. Mixing paddles, as the term is used herein, differ from mixing blades in that mixing blades have a longer axial extension, but are radially shorter. The mixing paddles can have impact surfaces, each describing an arc. This arc can be curved in the same direction as the convex area remote from the hub element.

It has been found that conventional, usually substantially cylindrical hub elements make only a small contribution to the blending of a mixture. Especially when only a limited torque is available, it is of great technical advantage if the hub element makes an effective contribution to the mixing results. It is also disadvantageous, and particularly disadvantageous when little torque is available, if the hub element brings large amounts of mixture with it. This can occur, for example, when large balls of dough form near the hub element. In contrast, the convex area remote from the hub in the direction of rotation assures that the mixture is pushed out to the outside, that is, away from the axis of rotation in a radial direction. Consequently, dough balls or mixture clumps do not form the center. This radial movement of the mixture away from the axis of rotation creates an further increased thorough mixing effect. This occurs partially by means of the areas remote from the hub, but partially also by the continuous feeding of the mixture to the mixing paddles and, optionally, to the mixing blades.

The hub element may have very different shapes, but it should preferably have at least one recess. A recess can be, for example, an indentation or depression in the surface of a cylindrical hub element. Preference is given according to this invention, however, to hub elements having a convex shape in at least one area remote from the axis. Particularly preferred are hubs elements having concave-convex shapes. For example, a hub element may have an S-shaped cross-section in all radial planes or in at least one radial plane. Such an S-shaped hub element has a central axis of rotation and two adjoining curved members. Also conceivable are hub elements which have three or four such arched members. Each arch has a convex shape viewed from one direction, and a concave shape viewed from the other direction. It has proved advantageous if the convex shape lies in the direction of rotation. This leads to better mixing of the mixture and avoids clumping near the axle.

Concave surfaces form natural recesses. An opening should be provided in the area of the at least one recess on the surface of the hub element. Through this opening, the first surface of the hub element is joined to with the second surface of the hub element, for example, the back side of the hub element is joined to the front side through the opening.

Such an opening can have multiple uses. For example, it is possible that a limited amount mixture would pass through the opening. This, in turn, leads to an even better thorough mixing of the mixture, especially that portion of the mixture in the area of the axis of rotation, which in general moves little.

The opening may be provided at different axial heights. The height will affect whether a large quantity or a small quantity or almost no mixture passes through the opening. If the hole is relatively high, for example, in the upper third of the axis of rotation, relatively little mixture passes through the opening, the mixing tool being so high that this third is not at all or usually is not immersed in the mixture. Even then, however, the opening also has significant benefits. It has been found that when cleaning the mixing tool, particularly in a dish washer, depending on the position of the mixture, residual water easily remains in the recess. The opening allows residual water to drain toward the other surface. Depending on the location of the mixing tool, the water can drain through the hole in almost any other direction. The opening thus makes the mixing tool easier to clean and dishwasher-safe, in particular.

There is even a third reason why the provision of an opening is beneficial. A mixing tool is frequently produced as an injection molded part. Such injection molding requires an injection site. It is often advantageous to provide the injection site centered on the axis of rotation. To do this, there are essentially two options, namely an injection site at the top of the mixing tool that is usually in the center of the coupling component, or alternatively, an injection site at the bottom of the mixing tool, that is, usually in the center of the bearing position. In both cases, an injected stream of material can spread over the entire length of the hub element. This can lead to what is known as "free jet", which is undesirable in injection molding.

Now, if an opening is provided in the area near the axis of the hub element, this results in the injection form having a bridge in the corresponding area. An injected stream would strike against this bridge. In this way, an uncontrolled stream or "free jet" is prevented.

Consequently, it is advantageous for the axis of rotation to pass through the opening. It is also advantageous for the opening to be provided in area of the upper third or in the area of the lower third of the axis of rotation.

The mixing tool may have mixing paddles in its lower third. In addition, the mixing tool can have mixing blades, which advantageously transition into the hub element in a junction without bends.

The first mixing paddle has a first radius and a first axial height. The first radius is determined as a distance between the following points: the outermost radial point of the mixing paddle and its radially innermost point at which it touches the radius line to the outermost point of the hub element. Additionally, the mixing paddle has an axial height representing its extension in the direction of the axis of rotation. If this thickness of the mixing paddle is not uniform, an average is calculated. The product of this first radius and the first axial height is referred to here as the first area product. It has the unity of a surfaced area and represents that surface with which the mixing paddle meets a mixture.

The mixing tool additionally has a first mixing blade. This has a different shape than the mixing paddle, namely (radially) shorter but (axially) longer. The mixing blade has a second radius and a second axial height. These lengths are calculated in a manner similar to those of the first mixing paddle. Their product is referred to herein as the second area product. The second area product is characteristic of the surface area with which the mixing blade impacts the mixture.

It is surprisingly shown that specific dimensioning of mixing paddle and mixing blade permits a particularly effective mixing of dough with low torque. In this way, areas of the mixture remote from the rotational axis can be reached by the first mixing paddle. In areas near the axis, the surface area of the mixing blade can be effective.

In a particularly effective mixing tool, the first area product is less than 75% or 50% of the second area product. Furthermore, the first radius can be not only twice as large as the second radius, but also three times or four times as large.

A mixing tool is particularly beneficial in which a second mixing paddle and a second mixing blade are also provided. These can be arranged in the same way as the corresponding first mixing paddle and the first mixing blade. Advantageously, the second mixing paddle is radially opposite the first and the second mixing blade is likewise radially opposite the first. A third radius and a third axial height and a third area product can be calculated on the second mixing paddle, as described for the first mixing paddle. Correspondingly, a fourth radius, a fourth axial height and a fourth area product can be calculated for the second mixing blade. Advantageously, here again the third radius is at least twice as large as the fourth radius and the third area product is smaller than the fourth area product. Again, it is possible for the third radius to be more than three times larger than the fourth radius. It is generally sufficient for the third area product to be only 75% or 50% or less than the fourth area product.

A particularly functional mixing tool results when the sum of the first and third area product is less than the sum of the second and fourth area product.

At its upper end, the hub element has a certain cross-sectional area, which is herein referred to as the second cross-sectional area. This can be S-shaped, for example. With a cylindrical hub element, it can simply be circular and can assume a variety of other shapes, which also result from the above description.

A coupling component is located above the hub element. It can also assume a variety of shapes. Usually its shape is matched to that of a corresponding coupling component joined to the drive unit. For example, it may be an receptacle in the lid of a mixing bowl. Onto such a mixing bowl lid the motor unit of a blender or the motor unit of a food processor can then be inserted by means of a gear mechanism. In particular, it is possible for the coupling component to have a shape consisting of several sections. In particular, it may consist of an essentially male coupling for insertion into a female counterpart. For example, the coupling component may have a cross-sectional area in the form of a cross. In particular, what is known as the first cross-sectional area, which the coupling component has at its lower end, is cross-shaped. Consequently, the first cross-sectional area is at the lower end of the coupling component and the second cross-sectional area is at the upper portion of the hub element. Preferably, the coupling component and the hub element do not go directly into one another. Between the coupling component and the hub element, that is, between the first cross-sectional area and the second cross-sectional area, a radial disc is provided. This radial disc preferably extends both over the first cross-sectional area and over the second cross-sectional area, and can assume various shapes, for example, it may be square, rectangular, oval or circular. But it can also be sufficient for the radial disc to extend only over one of the two cross-sectional areas, that is, over the first or over the second cross-sectional area.

The extension of the radial disc over these surfaces also has the advantage that the radial disc protects the coupling component contamination or damage from the mixture. For instance, spatter from the dough in general will not reach the coupling component. This radial disc also protects the entrance of the coupling component. The radial disc gives more overall stability to the hub element in general and allows it to transmit greater torques.

Any motor-driven food processor with a mixing tool as described herein is provided by the invention. The invention also provides for a method for beating (and/or mixing) dough with a mixing tool of the type described herein.

The mixing tool can be manufactured totally from a single material. Advantageously, it can be manufactured by injection molding. Especially plastics, in particular polyoxymethylene (POM). Other engineering plastics with good rigidity and good coefficients of friction, which thus can form a good lower bearing point, are also suitable.

The method for beating dough is advantageously executed at 800 to 1000 revolutions per minute. Compared to beating dough with other tools, the required torque is significantly reduced. This applies particularly to beating stiff doughs. Short pastry dough can serve as a reference. The reference short pastry beaten with a conventional food processor attachment, such as the dough hook of Braun K700 device, requires up to 1 Nm torque. The mixing tool according to the invention, however, allows such a dough to be mixed with a maximum torque of 0.5 Nm.

The following illustrations will also provide a better understanding of the invention. In as much as certain combination of technical features are presented below and in the accompanying explanatory text, these are also to be considered as disclosed individually and in other combinations, provided such combinations are technically possible and reasonable. In the illustrations:
- Fig. 1: is a perspective overall view of the mixing tool,
- Fig. 2: is a view from above of the first mixing paddle,
- Fig. 3: is a sectional view of the first mixing paddle, labeled as in Fig 2,
- Fig. 4: shows a sectional view of an alternative mixing paddle corresponding to Fig. 3,
- Fig. 5: is a sectional view of the outer end of the mixing paddle from Fig. 2,
- Fig. 6: is a view of the mixing tool from below,
- Fig. 7: is a side view of the mixing tool.

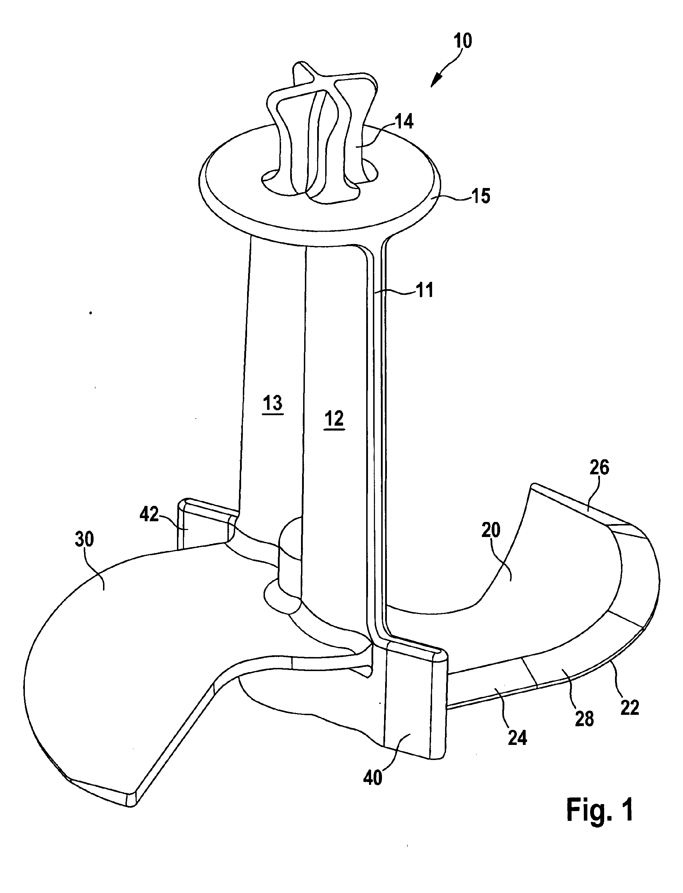

Fig. 1 shows a perspective view of the mixing tool 10 and its main elements. This includes in particular the hub element 11. As can be seen in this view, in cross-section the hub element is designed as an essentially undulating shape. The hub element 11 thus has a first curve 12, which in this view is convex as seen by the viewer, and a second curve 13 joined to it which is concave in this view. This allows high torque to be transmitted with little material and has the additional effect that the hub element can also contribute to the mixing of the dough. At the top of the hub element 11a ring 15 is attached to which the upper coupling component 14 is attached. With this coupling component 14, the mixing tool 10 can be inserted conveniently into a drive unit. As an example, a drive unit can be the upper lid of a mixing bowl, which is connected to a motor component. Below, the first mixing paddle 20 can be with the second mixing paddle 30 positioned opposite it. In addition, two mixing blades are provided offset at 90° to the direction defined by the two mixing paddles, namely, a first mixing blade 40 and an second mixing blade 42 positioned opposite it. The impact surface 22 is visible next to the first mixing paddle 20 turned towards the viewer. On the impact surface portion 24 is radially interior, while portion 26 is joined radially exterior. The viewer sees the inclined surface 28 which is on the impact surface 22 near the first mixing paddle 20 and is directed upward.

It is clean that the hub element has a substantially S-shaped cross-section at its upper end. Due to the opening in the middle, the S is not quite complete, but consists essentially of two unconnected arches. Thus, these define the first cross-sectional area. As can also be seen clearly, the coupling component directly above the ring has a cross-shaped cross-section, which in turn defines the second cross-sectional area. A radial disc 15 extending in a radial plane (that is, perpendicular to the rotational axis) connects the two cross-sectional areas and extends beyond both of them.

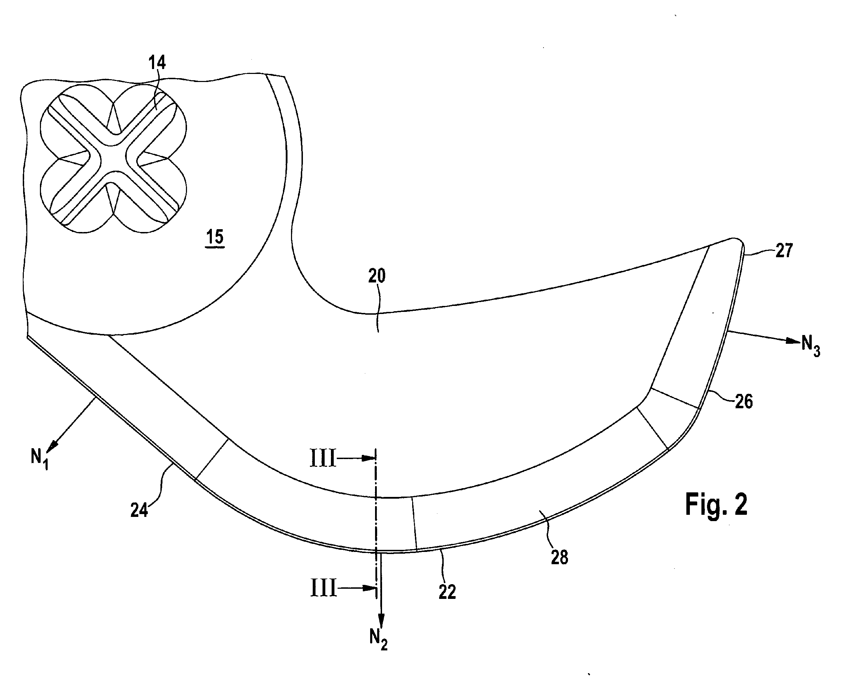

Fig. 2 shows the first mixing paddle 20 in a view from above. Thus, at the top left in the figure, the upper coupling component 14 can be seen. The first mixing paddle 20 has a highly curved impact surface 22. This includes a radially interior portion 24. The impact direction of the radially interior portion 24 essentially corresponds to the direction of rotation. In other words, a perpendicular on the impact surface of this radially interior portion 24 points in the direction of rotation. As can be clearly seen in the figure, the impact surface 22 describes an arc. The impact surface 22 is designed to be continuous. Lines perpendicular to the impact surface point along the base in different directions. A perpendicular to the outer portion 26 of the impact surface does not point in the direction of rotation of the first mixing paddle 20, but may even point radially outward, thus having nothing to do with the direction of rotation.

Along the impact surface 22, different perpendiculars are marked on the impact surface, namely perpendiculars N₁, N₂ and N₃. N₁ is radially the most inward lying and is situated on interior portion 24. N₁ is arranged substantially in the direction of rotation of the first mixing paddle 20. Perpendicular N₂ is inscribed in a central part of the arc that describes impact surface 22. It has one component in the direction of rotation and one component perpendicular to the direction of rotation, that is, radially outward. Perpendicular N₃, which lies on the exterior portion 26 of the impact surface 22, points approximately radially outward.

The first mixing paddle 20 ends in an outer end area 27. No frontal beating of the mixture takes place exactly in this outer end region 27, but, at best, a kind of "pulling-along", because the impact surface has a component oriented opposite the direction of rotation. The inclined surface 28 joins the impact surface 22 at the top.

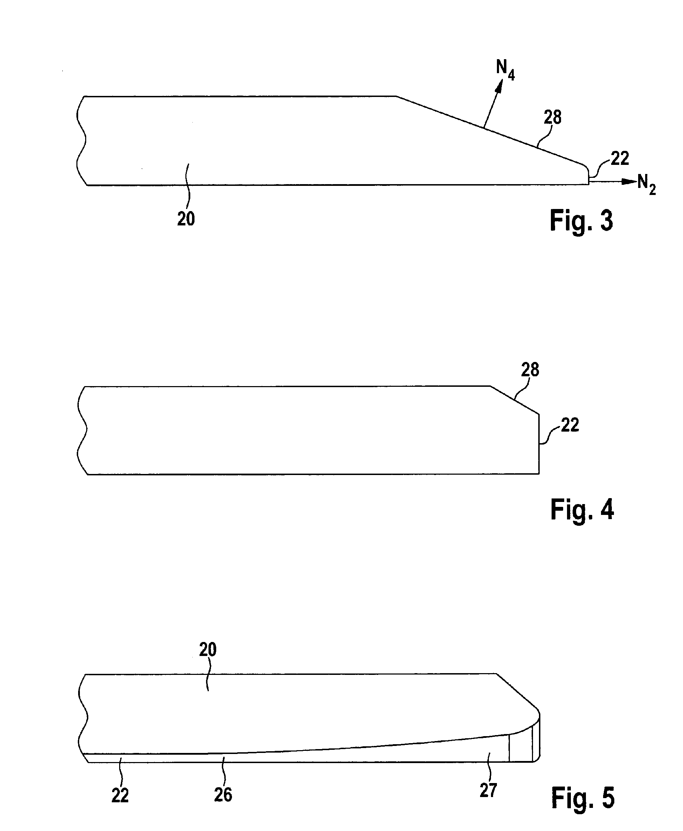

Fig. 3 shows the arrangement of inclined surface 28 and impact surface 22 of the first mixing paddle 20 again, more clearly. This figure shows a section through the first mixing paddle 20 along line III-III, as indicated in Figure 2. In this figure, a perpendicular to the impact surface 22 is shown as N₄. It can be seen that the inclined surface forms an acute angle with that perpendicular, which also lies in the direction of a radial plane. The perpendicular N₄ on the inclined surface 28 therefore points essentially upward.

Fig. 4 is a view corresponding to Fig. 3. Here, however, a relatively large impact surface 22 is shown, which differs from Fig. 3. Only a short inclined surface 28 is attached to it. An impact surface having a surface area greater than that of the inclined surface 28, falls entirely within the context of this invention. However, according to the invention, an inclined surface 28 which has a greater surface area compared to the impact surface 22 can also be used.

Fig. 5 shows a view of a favorable outer end region 27 of a mixing paddle for the mixing tool. In this extreme outermost area, the height of the impact surface 22 can increase. The length and thus the surface area of an inclined surface 28 joined thereto decreases accordingly. The upper edge of the impact surface 22 thus rises toward the outside. This geometry has proven to be beneficial for effective mixing of dough. Moreover, this also results in a user not being injured by sharp points and edges at the outer end of the mixing paddle.

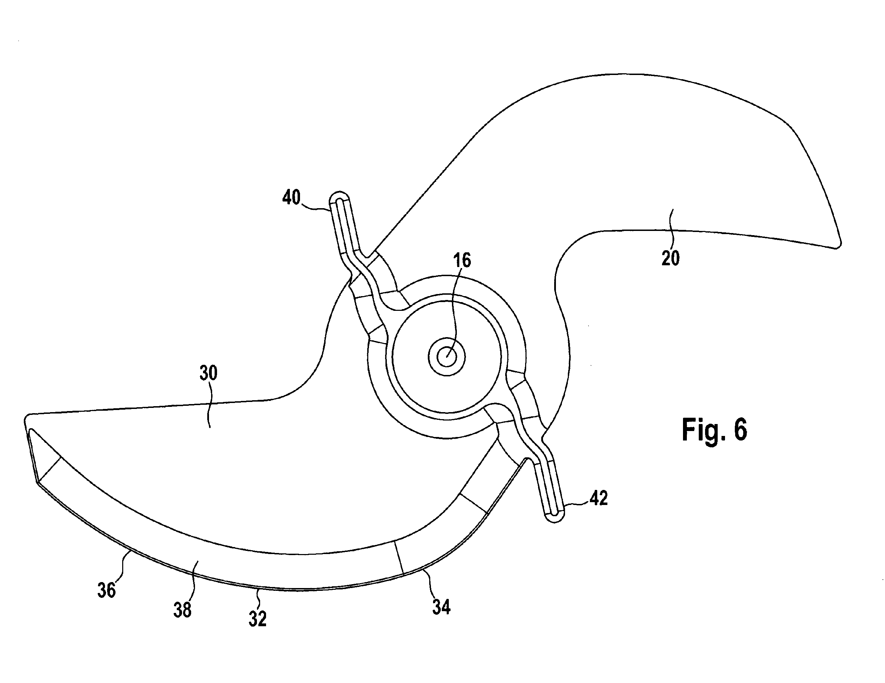

Fig. 6 shows a view of the mixing tool 10 from below. In the middle, the lower coupling component can be seen, which is designed as a bearing point 16. The bearing point 16 is essentially designed as a receptacle for a shaft section. In addition, one can see the first mixing blade 40 and the second mixing blade 42 as well as the first mixing paddle 20 and the second mixing paddle 30. Since the inclined surface 28 of the first mixing paddle is directed upward, it is not visible in this figure. In contrast, the inclined surface 38 of the second mixing paddle, which is directed downward 30, is visible. The second mixing paddle also has an impact surface 32 which curves continuously from a radially interior portion 34 to the radially exterior portion 36. However, one can see that the corresponding perpendiculars do not describe as large a range of angles as does the first mixing paddle 20. Further, one can see that the contours of the second mixing paddle 30 are different from those of the first mixing paddle 20. (The outline of the perimeter of the mixing paddle in the view from below applies.)

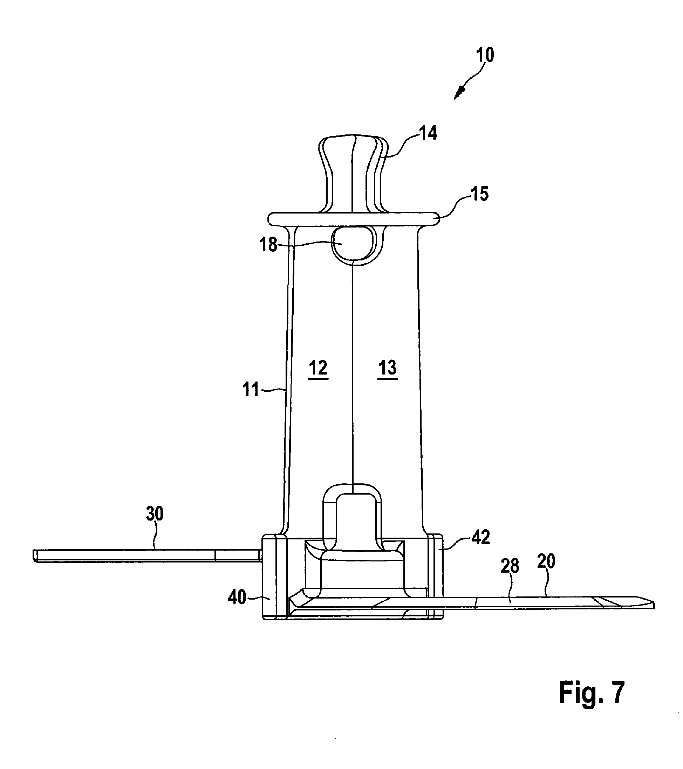

Fig. 7 shows a side view of the mixing tool 20 *[sic, translator].* Noteworthy elements again are the hub element 11 and the upper coupling component 14. Furthermore, one can recognize the first mixing paddle 20 and the second mixing paddle 30 as well as the first mixing blade 40 and the second mixing blade 42. The mixing blades are at the same height along the direction of the axis of rotation. This view also shows very well that the first mixing paddle 20 is configured below the second mixing paddle 30. *(Below* here means closer to the bearing position, as seen from the direction of the axis of rotation.) The arrangement of the mixing paddles at different levels has proved particularly effective for good kneading very stiff dough. As a result, it is advantageous if the lower mixing paddle has an upwardly inclined surface 28.

It can be also seen in the figure that an opening 18 is provided in the hub element 11. This is positioned in the upper third of the hub element, just below the ring 15. The ring 15 reinforces the hub element in this area so that, despite the saving of material incident to having an opening, the hub element can transfer a high torque.

### List of reference numerals:

- 10: mixing tool
- 11: hub element
- 12: first curve
- 13: second curve
- 14: upper coupling component
- 15: ring
- 16: bearing
- 18: opening
- 20: first mixing paddle
- 22: impact surface
- 24: radially interior portion
- 26: radially exterior portion
- 27: outer end region
- 28: inclined surface
- 30: second mixing paddle
- 32: impact surface
- 34: radially interior portion
- 36: radially exterior portion
- 38: inclined surface
- 40: first mixing blade
- 42: second mixing blade
- N₁: perpendicular to the impact surface of portion 24
- N₂: perpendicular to the impact surface
- N₃: perpendicular to the impact surface of part 26
- N₄: perpendicular to the inclined surface

## Claims

1. A mixing tool (10), preferably for mixing dough, having a hub element (12) able to rotate around a drive axis in a direction of rotation from which at least one mixing paddle (20) extends radially to the drive axis, having an impact surface (22) that is, curved so that it has different directions of impact, **characterized in that** a radially interior portion (24) of the impact surface has a direction of impact essentially parallel to the direction of rotation, and an adjacent radially exterior portion (26) has a direction of impact essentially perpendicular to the direction of rotation.

2. The mixing tool according to Claim 1, in which a radially outer end region (27) of the impact surface (22) has a component oriented opposite to the direction of rotation of the direction of impact.

3. The mixing tool (10) according to any of the preceding claims, in which the direction of impact changes more than 90° or more than 100° along the length of the impact surface (22).

4. The mixing tool (10) according to any of the preceding claims, in which the impact surface (22) is adjoined by an inclined surface (28) which forms an acute angle with a radial plane.

5. The mixing tool (10) according to any of the preceding claims, in which at least a second mixing paddle (30) extends radial to the drive axis, which has an impact surface (32) that is curved and has different impact directions.

6. The mixing tool according to any of the preceding claims, **characterized in that** the first mixing paddle (20) has an inclined surface (28) joined to its impact surface (22) which is oriented upwards and the second mixing tool (30) has an inclined surface (38) on its impact surface (32) which is oriented downwards.

7. The mixing tool (10) according to Claim 5 or 6, in which the second mixing paddle (30) lies radially opposite the first mixing paddle (20).

8. The mixing tool (10) according to Claim 5, 6 or 7, in which the second mixing paddle (30) has a different shape than the first mixing paddle (20).

9. The mixing tool (10) according to any of Claims 5 through 8 in which the second mixing paddle (30) is configured axially higher than the first mixing paddle (20).

10. The mixing tool (10) according to any of Claims 5 through 9, in which, on the second mixing paddle (30), the direction of impact changes less than 100° or less than 90° over the length of the impact surface (32).

11. The mixing tool (10) according to any of Claims 5 through 10, in which (38) the impact surface (32) of the second mixing paddle (30) adjoins an inclined surface, which forms an acute angle with a radial plane.

12. The mixing tool according to any of the preceding claims, **characterized in that** the hub element (12) has at least one area near the axis and at least one area remote from the axis, and the area remote from the axis has a convex shape.

13. The mixing tool according to Claim 12, **characterized in that** the hub element (12) has two areas remote from the axis and the cross-section of the hub element (12) is S-shaped in a radial plane.

14. The mixing tool according to Claim 12 or 13, **characterized in that** a mixing blade (40) is joined to at least one area remote from the axis of the hub element (12).

15. The mixing tool according to any of the preceding claims, **characterized in that** the hub element (12) has a first surface having at least one recess, and that in the area of the recess an opening (18) is provided through which the first surface is connected with a second surface of the hub element.

16. The mixing tool (10) according to Claim 15 wherein the opening (18) is provided in the area of the axis of rotation, preferably in the area of the upper third of the axis of rotation, so that the axis of rotation runs through the opening (18).

17. The mixing tool according to any of the preceding claims with at least one first mixing paddle (20) and at least one first mixing blade (40), wherein the first mixing paddle (20) has a first radius and a first axial height and a first area product, which is formed from the first radius and the first axial height, and the first mixing blade (40) has a second radius and a second axial height and a second area product, which is formed from the second radius and the second axial height, wherein the first radius is at least twice as large as the second radius and the first area product is smaller than the second area product.

18. The mixing tool (10) according to Claim 17, in which a second mixing paddle (30) and a second mixing blade (42) are provided.

19. The mixing tool (10) according to Claim 18, in which the second mixing paddle (30) lies radially opposite the first mixing paddle (20) and the second mixing blade (42) lies radially opposite the first mixing blade (40).

20. The mixing tool (10) according to Claim 18 or 19, in which the second mixing paddle (30) has third radius, and a third axial height and a third area product, which is formed from the third radius and the third axial height, and the second mixing blade (42) has a fourth radius and a fourth axial height and a fourth area product, which is formed from the fourth radius and the fourth axial height, wherein the mixing tool (10) is **characterized in that** the third radius is at least twice as large as the fourth radius and the third area product is smaller than the fourth area product.

21. The mixing tool according to any of the preceding claims, **characterized in that** the mixing tool has a coupling component and a radial disc (15), which is configured between the hub element (12) and the coupling component (14) and this has a first cross-sectional area at in the area transitional to the radial disc (15), and the hub element (12) has a second cross-sectional area in the area transitional to the radial disc (15), wherein the first cross-sectional area and the second cross-sectional area have different shapes, and the radial disc (15), at least partially projects beyond the first and/or the second cross-sectional area.

22. A motor driven food processor with a mixing tool (10) according to any of the preceding claims.

## Patentansprüche

1. Mixwerkzeug (10), vorzugsweise zum Mischen von Teig, mit einem Nabenelement (12), das zum Drehen um eine Drehachse in einer Richtung einer Drehung geeignet ist, von dem aus sich mindestens eine Mischschaufel (20) radial zu der Drehachse erstreckt, mit einer Aufprallfläche (22), die gekrümmt ist, sodass sie unterschiedliche Aufprallrichtungen aufweist, **dadurch gekennzeichnet, dass** ein radial innerer Abschnitt (24) der Aufprallfläche eine Aufprallrichtung aufweist, die im Wesentlichen parallel ist zu der Drehrichtung, und ein benachbarter radial äußerer Abschnitt (26) eine Aufprallrichtung aufweist, die im Wesentlichen senkrecht zu der Drehrichtung steht.

2. Mixwerkzeug (10) nach Anspruch 1, bei dem ein radial äußerer Endbereich (27) der Aufprallfläche (22) eine Komponente aufweist, die entgegengesetzt zu der Drehrichtung der Aufprallrichtung orientiert ist.

3. Mixwerkzeug (10) nach einem der vorstehenden Ansprüche, bei dem sich die Aufprallrichtung um mehr als 90° oder mehr als 100° entlang der Länge der Aufprallfläche (22) ändert.

4. Mixwerkzeug (10) nach einem der vorstehenden Ansprüche, bei dem sich an die Aufprallfläche (22) eine geneigte Fläche (28) anschließt, die einen spitzen Winkel mit einer radialen Ebene bildet.

5. Mixwerkzeug (10) nach einem der vorstehenden Ansprüche, bei dem sich mindestens eine zweite Mischschaufel (30) radial zu der Antriebsachse erstreckt, die eine Aufprallfläche (32) aufweist, die gekrümmt ist und unterschiedliche Aufprallrichtungen aufweist.

6. Mixwerkzeug nach einem der vorstehenden Ansprüche, **dadurch gekennzeichnet, dass** die erste Mischschaufel (20) eine mit ihrer Aufprallfläche (22) verbundene geneigte Fläche (28) aufweist, die nach oben orientiert ist, und das zweite Mixwerkzeug (30) auf seiner Aufprallfläche (32) eine geneigte Fläche (38) aufweist, die nach unten orientiert ist.

7. Mixwerkzeug (10) nach Anspruch 5 oder 6, bei dem die zweite Mischschaufel (30) radial entgegengesetzt zu der ersten Mischschaufel (20) angeordnet ist.

8. Mixwerkzeug (10) nach Anspruch 5, 6 oder 7, bei dem die zweite Mischschaufel (30) eine andere Form als die erste Mischschaufel (20) aufweist.

9. Mixwerkzeug (10) nach einem der Ansprüche 5-8, bei dem die zweite Mischschaufel (30) axial höher ausgebildet ist als die erste Mischschaufel (20).

10. Mixwerkzeug (10) nach einem der Ansprüche 5-9, bei dem sich die Aufprallrichtung auf der zweiten Mischschaufel (30) um weniger als 100° oder weniger als 90° über die Länge der Aufprallfläche (32) ändert.

11. Mixwerkzeug (10) nach einem der Ansprüche 5-10, bei dem sich die Aufprallfläche (32) der zweiten Mischschaufel (30) an eine geneigte Fläche anschließt, die einen spitzen Winkel mit einer radialen Ebene bildet.

12. Mixwerkzeug nach einem der vorstehenden Ansprüche, **dadurch gekennzeichnet, dass** das Nabenelement (12) mindestens einen Bereich nahe zu der Achse und mindestens einen Bereich fern von der Achse aufweist, und der Bereich fern von der Achse eine konvexe Form aufweist.

13. Mixwerkzeug nach Anspruch 12, **dadurch gekennzeichnet, dass** das Nabenelement (12) zwei von der Achse ferne Bereiche aufweist und der Querschnitt des Nabenelements (12) in einer radialen Ebene S-förmig ist.

14. Mixwerkzeug nach Anspruch 12 oder 13, **dadurch gekennzeichnet, dass** sich ein Mischflügel (40) an mindestens einen von der Achse des Nabenelements (12) fernen Bereich anschließt.

15. Mixwerkzeug nach einem der vorstehenden Ansprüche, **dadurch gekennzeichnet, dass** das Nabenelement eine erste Fläche mit mindestens einer Vertiefung aufweist, und dass in dem Bereich der Vertiefung eine Öffnung (18) vorgesehen ist, durch welche die erste Fläche mit einer zweiten Fläche des Nabenelements verbunden ist.

16. Mixwerkzeug (10) nach Anspruch 15, bei dem die Öffnung (18) in dem Bereich der Drehachse vorgesehen ist, vorzugsweise in dem Bereich des oberen Drittels der Drehachse, so dass die Drehachse durch die Öffnung (18) verläuft.

17. Mixwerkzeug nach einem der vorstehenden Ansprüche mit zumindest einer ersten Mischschaufel (20) und mindestens einem ersten Mischflügel (40), wobei die erste Mischschaufel (20) einen ersten Radius und eine erste axiale Höhe und ein erstes Flächenprodukt aufweist, das aus dem ersten Radius und der ersten axialen Höhe gebildet ist, und der erste Mischflügel (40) einen zweiten Radius und eine zweite axiale Höhe und ein zweites Flächenprodukt aufweist, das aus dem zweiten Radius und der zweiten axialen Höhe gebildet ist, wobei der erste Radius mindestens zweimal so groß ist wie der zweite Radius und das erste Flächenprodukt kleiner ist als das zweite Flächenprodukt.

18. Mixwerkzeug (10) nach Anspruch 17, bei dem eine zweite Mischschaufel (30) und ein zweiter Mischflügel (42) vorgesehen sind.

19. Mixwerkzeug (10) nach Anspruch 18, bei dem die zweite Mischschaufel (30) radial entgegengesetzt zu der ersten Mischschaufel (20) angeordnet ist und der zweite Mischflügel (42) radial entgegengesetzt zu dem ersten Mischflügel (40) angeordnet ist.

20. Mixwerkzeug (10) nach Anspruch 18 oder 19, bei dem die zweite Mischschaufel (30) einen dritten Radius, eine dritte axiale Höhe und ein drittes Flächenprodukt aufweist, das aus dem dritten Radius und der dritten axialen Höhe gebildet ist, und der zweite Mischflügel (42) einen vierten Radius und eine vierte axiale Höhe und ein viertes Flächenprodukt aufweist, das aus dem vierten Radius und der vierten axialen Höhe gebildet ist, wobei das Mixwerkzeug (10) **dadurch gekennzeichnet ist, dass** der dritte Radius mindestens zweimal so groß ist wie der vierte Radius und das dritte Flächenprodukt kleiner ist als das vierte Flächenprodukt.

21. Mixwerkzeug nach einem der vorstehenden Ansprüche, **dadurch gekennzeichnet, dass** das Mixwerkzeug eine Verbindungskomponente und eine radiale Scheibe (15) aufweist, die zwischen dem Nabenelement (12) und dem Verbindungselement (14) ausgebildet ist, und dieses weist eine erste Querschnittsfläche in dem zu der radialen Scheibe (15) übergehenden Bereich auf, und das Nabenelement (12) weist eine zweite Querschnittsfläche in dem zu der radialen Scheibe (15) übergehenden Bereich auf, wobei die erste Querschnittsfläche und die zweite Querschnittsfläche unterschiedliche Formen aufweisen, und die radiale Scheibe (15) zumindest partiell über die erste und/oder die zweite Querschnittsfläche hervorsteht.

22. Motorbetriebene Küchenmaschine mit einem Mixwerkzeug (10) nach einem der vorstehenden Ansprüche.

## Revendications

1. Outil de mélange (10) pour mélanger de préférence de la pâte, ayant un élément de moyeu (12) apte à tourner autour d'un axe d'entraînement dans une direction de rotation à partir duquel au moins une palette de mélange (20) s'étend radialement par rapport à l'axe d'entraînement, ayant une surface d'impact (22) qui est, incurvée de sorte qu'elle ait différentes directions d'impact, **caractérisé en ce qu'**une partie radialement intérieure (24) de la surface d'impact a une direction d'impact essentiellement parallèle à la direction de rotation, et une partie adjacente radialement extérieure (26) a une direction d'impact essentiellement perpendiculaire à la direction de rotation.

2. Outil de mélange selon la revendication 1, dans lequel une région d'extrémité radialement externe (27) de la surface d'impact (22) a un composant orienté à l'opposé de la direction de rotation de la direction d'impact.

3. Outil de mélange (10) selon l'une des revendications précédentes, dans lequel la direction d'impact change de plus de 90° ou de plus de 100° le long de la longueur de la surface d'impact (22).

4. Outil de mélange (10) selon l'une des revendications précédentes, dans lequel la surface d'impact (22) est contiguë à une surface inclinée (28) qui forme un angle aigu avec un plan radial.

5. Outil de mélange (10) selon l'une des revendications précédentes, dans lequel au moins une deuxième palette de mélange (30) s'étend radialement à l'axe d'entraînement, qui a une surface d'impact (32) qui est incurvée et a différentes directions d'impact.

6. Outil de mélange selon l'une des revendications précédentes, **caractérisé en ce que** la première palette de mélange (20) a une surface inclinée (28) reliée à sa surface d'impact (22) qui est orientée vers le haut et le deuxième outil de mélange (30) a une surface inclinée (38) sur sa surface d'impact (32) qui est orientée vers le bas.

7. Outil de mélange (10) selon la revendication 5 ou 6, dans lequel la deuxième palette de mélange (30) se situe radialement à l'opposé de la première palette de mélange (20).

8. Outil de mélange (10) selon la revendication 5, 6 ou 7, dans lequel la deuxième palette de mélange (30) a une forme différente de celle de la première palette de mélange (20).

9. Outil de mélange (10) selon l'une des revendications 5 à 8, dans lequel la deuxième palette de mélange (30) est configurée de manière à être axialement plus élevée que la première palette de mélange (20).

10. Outil de mélange (10) selon l'une des revendications 5 à 9, dans lequel, sur la deuxième palette de mélange (30), la direction d'impact change de moins de 100° ou de moins de 90° sur la longueur de la surface d'impact (32).

11. Outil de mélange (10) selon l'une des revendications 5 à 10, dans lequel la surface d'impact (32) de la deuxième palette de mélange (30) est contiguë à une surface inclinée (38), qui forme un angle aigu avec un plan radial.

12. Outil de mélange selon l'une des revendications précédentes, **caractérisé en ce que** l'élément de moyeu (12) présente au moins une zone proche de l'axe et au moins une zone éloignée de l'axe, et la zone éloignée de l'axe a une forme convexe.

13. Outil de mélange selon la revendication 12, **caractérisé en ce que** l'élément de moyeu (12) présente deux zones éloignées de l'axe et la coupe transversale de l'élément de moyeu (12) est en forme de S dans un plan radial.

14. Outil de mélange selon la revendication 12 ou 13, **caractérisé en ce qu'**une lame de mélange (40) est reliée à au moins une zone éloignée de l'axe de l'élément de moyeu (12).

15. Outil de mélange selon l'une des revendications précédentes, **caractérisé en ce que** l'élément de moyeu (12) a une première surface ayant au moins un évidement, et **en ce que** dans la zone de l'évidement, une ouverture (18) à travers laquelle la première surface est reliée à une deuxième surface de l'élément de moyeu, est prévue.

16. Outil de mélange (10) selon la revendication 15, dans lequel l'ouverture (18) est prévue dans la zone de l'axe de rotation, de préférence dans la zone du tiers supérieur de l'axe de rotation, de sorte que l'axe de rotation passe à travers l'ouverture (18).

17. Outil de mélange selon l'une des revendications précédentes avec au moins une première palette de mélange (20) et au moins une première lame de mélange (40), dans lequel la première palette de mélange (20) a un premier rayon et une première hauteur axiale et un premier produit de surface, qui est formé à partir du premier rayon et de la première hauteur axiale, et la première lame de mélange (40) a un deuxième rayon et une deuxième hauteur axiale et un deuxième produit de surface, qui est formé à partir du deuxième rayon et de la deuxième hauteur axiale, dans lequel le premier rayon est au moins deux fois plus grand que le deuxième rayon et le premier produit de surface est plus petit que le deuxième produit de surface.

18. Outil de mélange (10) selon la revendication 17, dans lequel une deuxième palette de mélange (30) et une deuxième lame de mélange (42) sont fournies.

19. Outil de mélange (10) selon la revendication 18, dans lequel la deuxième palette de mélange (30) se situe radialement à l'opposé de la première palette de mélange (20) et la deuxième lame de mélange (42) se situe radialement à l'opposé de la première lame de mélange (40).

20. Outil de mélange (10) selon la revendication 18 ou 19, dans lequel la deuxième palette de mélange (30) a un troisième rayon, et une troisième hauteur axiale et un troisième produit de surface, qui est formé à partir du troisième rayon et de la troisième hauteur axiale, et la deuxième lame de mélange (42) a un quatrième rayon et une quatrième hauteur axiale et un quatrième produit de surface, qui est formé à partir du quatrième rayon et de la quatrième hauteur axiale, dans lequel l'outil de mélange (10) est **caractérisé en ce que** le troisième rayon est au moins deux fois plus grand que le quatrième rayon et le troisième produit de surface est plus petit que le quatrième produit de surface.

21. Outil de mélange selon l'une des revendications précédentes, **caractérisé en ce que** l'outil de mélange a un composant de couplage et un disque radial (15), qui est configuré entre l'élément de moyeu (12) et le composant de couplage (14) et ce dernier a une première surface en coupe transversale dans la zone de transition au disque radial (15), et l'élément de moyeu (12) a une deuxième surface en coupe transversale dans la zone de transition au disque radial (15), dans lequel la première surface en coupe transversale et la deuxième surface en coupe transversale ont des formes différentes, et le disque radial (15) fait saillie, au moins partiellement, au-delà de la première et/ou de la deuxième surface en coupe transversale.

22. Robot de cuisine entraîné par moteur avec un outil de mélange (10) selon l'une des revendications précédentes.
